# EUROPEAN PATENT SPECIFICATION

(11) **EP 2 410 835 B1**
(45) Date of publication and mention of the grant of the patent: **25.12.2013**
(21) Application number: 09776477.3
(22) Date of filing: 26.03.2009
(51) Int. Cl.: A01D 43/063, A01D 34/81, A01D 34/82

(54) **LAWNMOWERS**
RASENMÄHER
TONDEUSES À GAZON

(43) Date of publication of application: 01.02.2012
(73) Proprietor: Husqvarna UK Limited, County Durham, DL5 6UP (GB)
(72) Inventor: SPARKES, Richard, Dipton Co Durham DH9 9DT (GB); MARTIN, Edward, Waterlooville Hampshire PO8 9QE (GB); ZETTERSTROM SMITH, Ian, Thirsk North Yorshire YO7 2LJ (GB); THOMAS, Roger, Stockton on Tees Cleveland TS21 2DS (GB)
(74) Representative: Valea AB
(86) International application number: PCT/EP2009/002199
(87) International publication number: WO 2010/108511

(56) References cited:
- EP-A- 0 457 433
- EP-A- 1 410 708
- EP-A- 1 512 319
- FR-A- 2 557 419
- FR-A- 2 768 299
- GB-A- 2 333 435

## Description

This invention relates to lawnmowers.

Known grass collecting lawnmowers, for example those known from the United Kingdom Patent Application publication no GB 2 333 435 and European Patent Application publication no EP 1 425 955, comprise a housing with a cutting element working in a cutting chamber formed in the underside of the housing. Outside the cutting chamber, either above or adjacent to it, there is a collection receptacle commonly known as a grass box.

Typically, the grass box will have an opening therein to enable the collected material to be emptied, typically into a compost heap or a bin. The opening will typically be covered by a lid. The lid is typically removable, attached to the housing or attached to the grass box. Removable lids are a poor ergonomic choice, as they require removal and then placing on the ground before the grass box can be emptied. In that case, the lid can be easily damaged. Lids attached to the grass box are liable to damage as the grass box is handled and encumber the emptying of the grass box.

Lids attached to the housing of the lawnmower are increasingly common, and are reflected in the two patent application publications to which reference is made above. The lid is typically pivotally mounted on the housing, either freely, or biased into a closed position by a spring. Such an arrangement requires either two hands, or two movements to remove the grass box for emptying; one to open the lid, and the other to remove the grass box.

EP1512319 A2 discloses a lawnmower having pivotable lid. The lid is arranged to cover a removable grass box. Either two hands or two movements are required to remove the grass box for emptying.

Furthermore, lids that are spring loaded (for example, that shown in GB 2 333 435) or otherwise biased (for example, by the action of gravity) into a closed position will necessarily move straight into that closed position on removal of the grass box, requiring further multiple-handed actions to replace the grass box. In order to move the lid into an open position (where the grass box can be replaced) the lid must be forced by the user into the open position.

According to the invention, there is provided a lawnmower having a housing and a grass box, the housing supporting the grass box, the lawnmower further comprising an lid mounted on the housing and having a closed position and an open position, the lid overlying the grass box in the closed position, in which the grass box is removable from the housing by lifting it off the housing, and the action of lifting the grass box off the housing causes the lid to move from the closed position to the open position.

Accordingly, by having the action of lifting the grass box off the housing open the lid, the ergonomics of the lawnmower can be improved, as a single action can both open the lid and remove the grass box. Previously, at least two actions were required, such as to separately open a lid then lift out the grass box, or to pivot the grass box to unlock it from the housing before it could be lifted off. The present invention has the potential for one-handed grass box removal.

Furthermore, in addition to the above, the action of replacing the grass box on the housing may cause the lid to move from the open position to the closed position. Thus, not only may one-handed removal of the grass box be possible, but one-handed replacement of the grass box. The lid may conveniently remain open until the grass box is replaced, avoiding the need for a user to reopen the lid before replacing the grass box.

The lid may be stable in the open position and the closed position, but may be unstable as it moves between the open position and the closed position, such that as the lid moves between the open position and the closed position it will tend to move towards the open or the closed position. Typically, there will be a balance point between the open and closed positions where the lid will switch from tending towards the open position to tending towards the closed position. The action of lifting the grass box from the housing may move the lid through the balance point, so that the lid then tends towards the open position. Similarly, the action of replacing the grass box may move the lid through the balance point, so that the lid then tends towards the closed position.

This may be accomplished by providing a bias biasing the lid into the open or closed positions. The bias may comprise at least one of a resilient member such as a spring, including an over-centre spring, and the use of the weight of the lid.

The movement of the lid, typically from the closed position to the open position, or from the closed or open positions through the balance point, may be caused by part of the grass box engaging part of the lid. The lid may be provided with a finger that extends from the remainder of the lid. The finger may engage the grass box when the grass box is supported by the housing or when the grass box is replaced on the housing, so as to urge the lid towards the closed position. The finger may engage the grass box until the grass box has passed the balance point and not when the grass box is supported by the housing, or may engage the grass box for the entirety of the travel from the open position to the closed position.

Alternatively or additionally, there may be provided at least one catch that is operative to hold the lid in the open or closed position until the grass box is replaced or lifted off the housing respectively. The catch may comprise an over-centre spring (an over-centre spring being a spring such as a tension spring where the tension in the spring is highest at an intermediate position of its travel, rather than at an end) a magnetic or electromagnetic catch, an adhesive catch or a hook and eye fastener such as VELCRO (RTM). The action of replacing the grass box or lifting the grass box off the housing may release the catch to allow movement of the lid.

The lawnmower may be provided with a flexible member extending between the lid and the housing. The grass box may engage the flexible member as the grass box is replaced on the housing, so as to drive the lid into the closed position.

Typically, the lid will be pivotally mounted on the housing.

Typically, the lawnmower will comprise a cutting element housed in a cutting chamber formed in an underside of the housing, such that the cutting element may cut grass that it is passed over. The lawnmower may be provided with an airflow source that causes air to flow into the grass box when the grass box is supported by the housing. As the lawnmower is moved over grass to cut the grass, the cut grass can then be entrained in the air flow and captured in the grass box.

The airflow source can be an impeller mounted on the cutting element for rotation therewith. This is typically the case with hover mowers. However, the airflow source may be independent of the cutting element.

The grass box may have a handle positioned, when the grass box is supported by the housing, above the centre of gravity of the grass box. This is ergonomically advantageous, as it can avoid excessive strain in a user's forearm and facilitates one-handed lifting of the grass box.

The grass box may be provided with an orifice for discharging of grass within the grass box. When supported by the housing, the lid in its closed position may overlie the orifice.

The grass box may be provided with a transparent or translucent window for viewing the level of grass within the grass box. This allows a user to conveniently determine when the grass box is full. Alternatively, the grass box itself may be transparent or translucent, which will typically allow the level of grass to be determined by looking through the grass box. By providing a transparent or translucent grass box rather than providing a window in an otherwise opaque grass box, the grass box can be manufactured out of a single transparent or translucent material, which is more convenient than having to fit a window into a body of another material.

Thus, the lid can be opened whenever the lawnmower is stopped; again, this not only allows for simple removal of the grass box, but also allows the grass level in the grass box to be seen simply every time the lawnmower is stopped.

There now follows, by way of example only, description of an embodiment of the invention with reference to the accompanying drawings, in which:
**Figure 1** shows a perspective view of a lawnmower according to an embodiment of the invention;
**Figures 2 to 4** show perspective views of the lawnmower of Figure 1 as the grass box is lifted off the housing;
**Figure 5** shows a detail view of the lid of the lawnmower of Figure 1 from one side;
**Figure 6** shows a detail view of the lid of the lawnmower of Figure 1 from the other side; and
**Figure 7** shows an underside plan view of the lawnmower of Figure 1.

A lawnmower according to an embodiment of the invention is shown in the accompanying Figures. It comprises a housing 1 on which is supported a grass box 2.

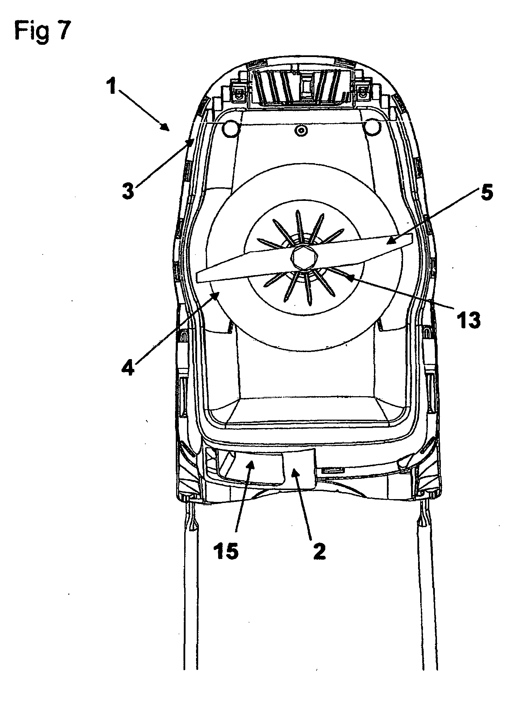

A lower part of the housing 1 forms a cowl 3 defining a cutting chamber 4 on the underside (shown in Figure 7 of the accompanying drawings) of the housing 1. A cutting element 5 of the form of a rotating blade is mounted in the cutting chamber 4 so as to cut grass as the lawnmower is moved over the grass. The cutting implement also has an impeller 13 mounted on it. This sucks air from duct 14 in the housing 2 and blows it downwards, in order to generate an air cushion on which the lawnmower rides.

The duct 14 is adjacent to the grass box 2. The walls of the grass box are slatted, so as to allow the passage of air, but not a substantial amount of grass therethrough. Thus the action of the impeller is to suck air from the grass box 2. Consequently, air is drawn into an inlet 15 of the grass box; the impeller is therefore acting as an airflow source; the lid, in the closed position, acts to enclose the grass box. This enables a pressure lower than local atmospheric pressure to be built up in the grass box, with the only access to the grass box via the inlet 15.

This low pressure acts to suckh air inwards through the inlet 15. This airflow is directed so as to suck from the area around the underside of the lawnmower, behind the cutting chamber. When the lawnmower is used, cut grass will be entrained in the air flow and pass into the grass box 2, where it will be collected as it is substantially prevented from passing through the slats in the walls of the grass box.

The grass box 2 is transparent, and is manufactured from Polypropylene (PP) or Acrylonitrile butadiene styrene (ABS). Thus, as the grass box 2 fills up with grass, it is easy to see the level of the grass in the grass box 2 through the grass box's walls.

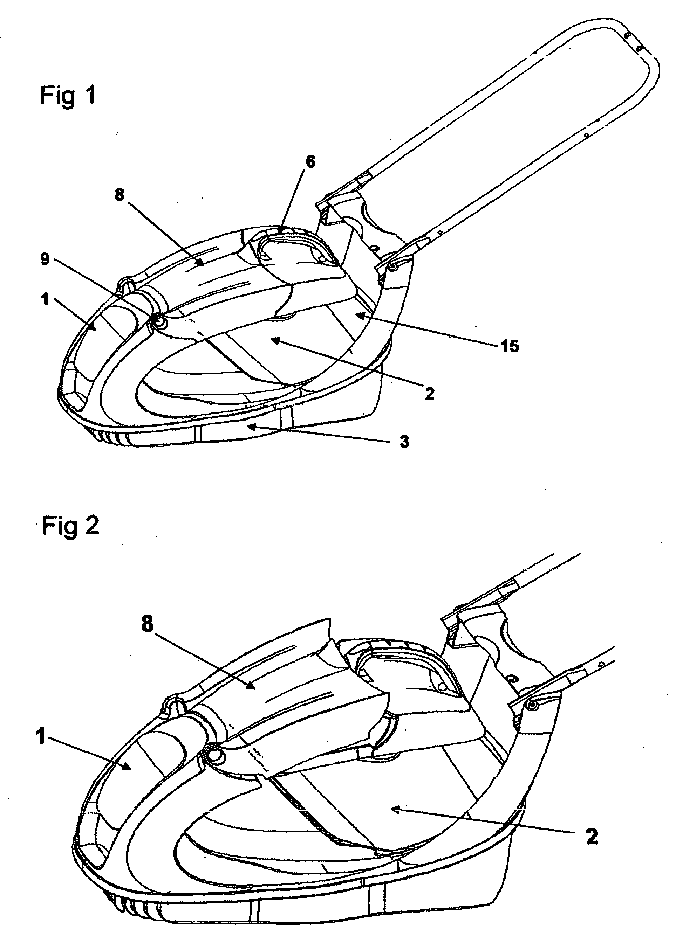

The grass box 2 is provided with a handle 6, which is positioned so that, when the grass box 2 is supported by the housing 1 in the position shown in Figure 1 of the accompanying drawings, the handle 6 is positioned directly over the centre of gravity of the grass box 2. This makes lifting the grass box 2 off of the housing 1 simple.

The grass box 2 has an orifice 7, through which grass can be discharged from the grass box once the grass box is full. However, it is undesirable for this orifice 7 to be accessible during mowing. Accordingly, the lawnmower is provided with a lid 8, pivotally mounted on the housing at pivot point 9. In the closed position shown in Figure 1, which is the position in which the lawnmower would be used to mow, the lid 8 overlies the grass box 2 and in particular the orifice 7 thereof. This blocks grass from escaping during mowing and prevents air entering the grass box except through the inlet 15.

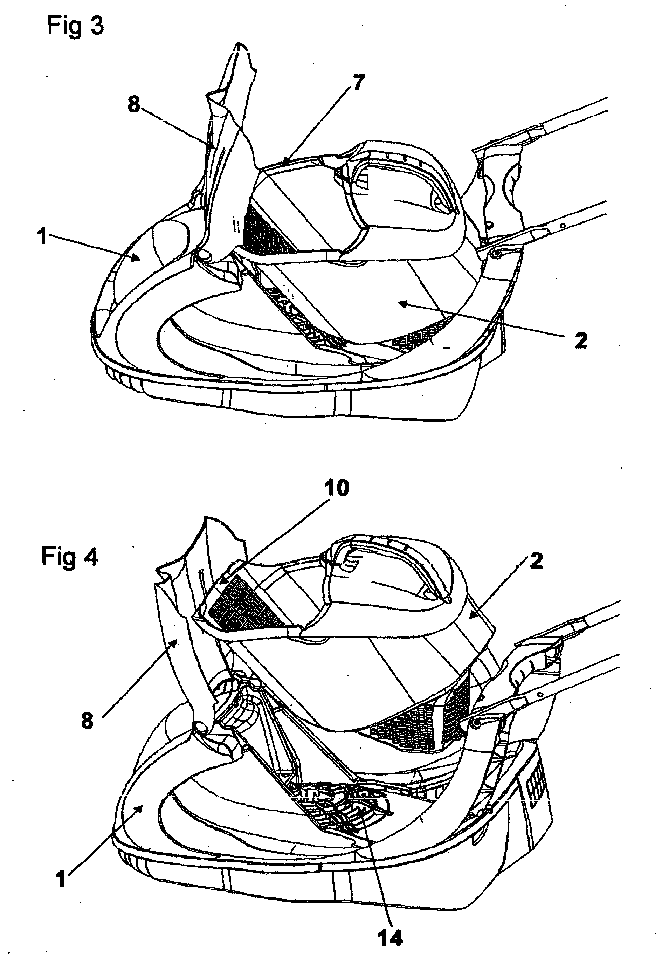

The grass box 2 of this embodiment of the invention can be lifted off the housing 1. Particularly in combination with the positioning of the handle 6, this provides for simple, ergonomic, one-handed removal of the grass box. Furthermore, the action of lifting the grass box 2 off of the housing 1 acts to move the lid from the closed position of Figure 1 to an open position, depicted in Figures 4 to 6. This is demonstrated in more detail in Figures 2 to 4.

As the user lifts the grass box 2 off of the housing 1, the front edge 10 of the grass box acts as a cam on the underside of the lid 8. The action of the user raising the grass box 2 therefore also tends to open lid 8, as the front edge 10 forces the lid upwards, pivoting around pivot point 9. Eventually, the centre of gravity of the lid 8 passes over the pivot point 9. and the lid falls into the open position shown in Figure 4 of the accompanying drawings.

This position is only slightly past the point at which the centre of gravity of the lid 8 is over the pivot point 9, which forms a balance point. To either side of the balance point, the lid 8 is unstable and will fall under the effects of gravity into either of the stable open or closed positions. By moving the lid 8 past the balance point by the cam action of the front edge 10 of the grass box 2, the lid 8 will be placed in the open position without the user needing to interact with it.

The user of the lawnmower can now dispose of the contents of the grass box 2 at their convenience. The lid 8 will stay in the open position, as it is stable. When the user desires to replace the grass box 2, so that mowing can recommence or for the convenient storage of the lawnmower, the user simply replaces the grass box 2 on the housing 1, which causes the lid 8 to move into the closed position as described below.

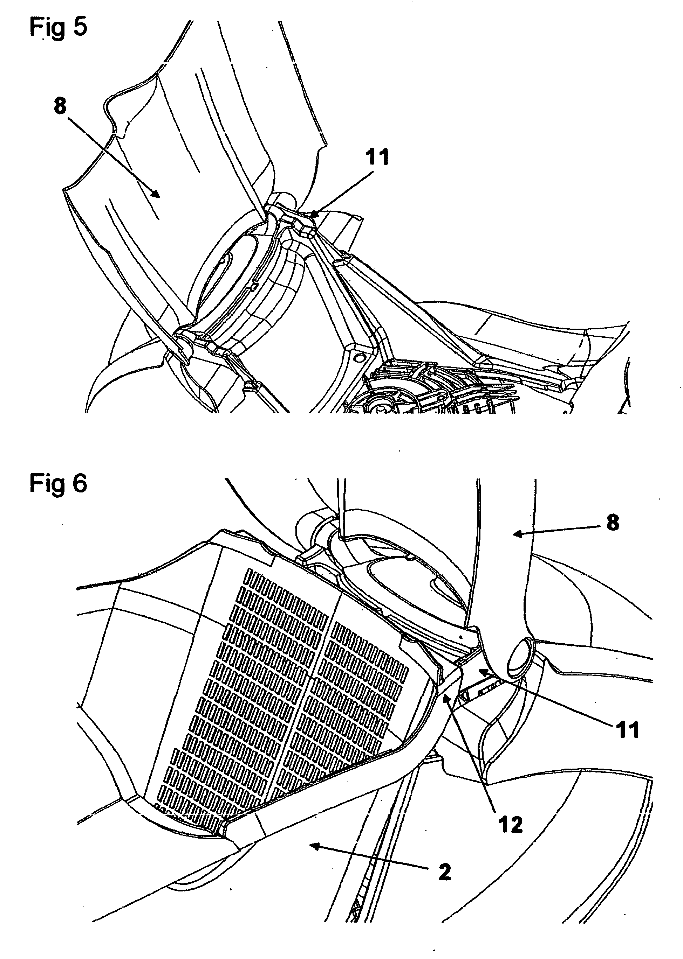

As can be seen in Figures 5 and 6 of the accompanying drawings, the lid 8 comprises a finger 11, extending from the remainder of the lid 8. As the grass box is replaced on the housing, an extension 12 of the grass box 2 engages the top of this finger 11. As the grass box is moved downwards by a user onto the housing 1, the extension 12 pushes down on the finger 11. The finger is fixed to the lid 8, and so the lid pivots from the open position past the balance point.

This is sufficient to make the lid unstable, tending towards the closed position. The lid will then fall, under its own weight, into the closed position, without the user needing to interact with it.

Thus, this embodiment of the invention provides a lawnmower in which the grass box can be removed and replaced with a single, one-handed action, where the lid automatically opens, remains open and then closes once the grass box is replaced. The transparent grass box is particularly convenient, as it allows the level of grass to be determined easily by a user, and can be simply manufactured as it is formed mostly of a single material.

## Claims

1. A lawnmower having a housing (1) and a grass box (2), the housing (1) supporting the grass box (2), the lawnmower further comprising a lid (8) mounted on the housing (1) and having a closed position and an open position, the lid (8) overlying the grass box (2) in the closed position, in which the grass box (2) is removable from the housing (1) by lifting it off the housing,
**characterized in that** the action of lifting the grass box (2) off the housing (1) causes the lid (8) to move from the closed position to the open position.

2. The lawnmower of claim 1, in which the action of replacing the grass box (2) on the housing (1) causes the lid (8) to move from the open position to the closed position.

3. The lawnmower of claim 1 or claim 2, in which the lid (8) remains in the open position until the grass box (2) is replaced.

4. The lawnmower of any preceding claim, in which the lid (8) is stable in the open position and the closed position, but is unstable as it moves between the open position and the closed position

5. The lawnmower of claim 4, in which, as the lid (8) moves between the open position and the closed position it will tend to move towards the open or the closed position and in which the lid (8) has a balance point between the open and closed positions where the lid (8) switches from tending towards the open position to tending towards the closed position.

6. The lawnmower of claim 5, in which the action of lifting the grass box (2) from the housing (1) moves the lid (8) through the balance point.

7. The lawnmower of claim 5 or claim 6, in which the action of replacing the grass box (2) moves the lid (8) through the balance point.

8. The lawnmower of any preceding claim, in which the movement of the lid (8) is caused by part of the grass box (2) engaging part of the lid (8).

9. The lawnmower of claim 8, in which the lid (8) is provided with a finger (11) that extends from the remainder of the lid (8).

10. The lawnmower of any preceding claim, provided with at least one catch that is operative to hold the lid (8) in the open or closed position until the grass box (2) is replaced or lifted off the housing (1) respectively.

11. The lawnmower of any preceding claim, provided with a flexible member extending between the lid (8) and the housing (1).

12. The lawnmower of any preceding claim, in which the lid (8) is pivotally mounted on the housing (1).

13. The lawnmower of any preceding claim, in which the grass box (2) comprises a handle (6) positioned, when the grass box (2) is supported by the housing (1), above the centre of gravity of the grass box (2).

14. The lawnmower of any preceding claim, in which the grass box (2) is provided with an orifice for discharging of grass within the grass box (2) and in which, when the grass box (2) is supported by the housing (1), the lid (8) in its closed position overlays the orifice.

15. The lawnmower of any preceding claim, in which the grass box (2) is provided with a transparent or translucent window for viewing the level of grass within the grass box. (2).

16. The lawnmower of any of claims 1 to 14, in which the grass box (2) is transparent or translucent, such that the level of grass can be determined by looking through the grass box (2).

## Patentansprüche

1. Rasenmäher mit einem Gehäuse (1) und einem Grasfangkorb (2), wobei das Gehäuse (1) den Grasfangkorb (2) trägt, wobei der Rasenmäher ferner einen Deckel (8) umfasst, der an dem Gehäuse (1) montiert ist und eine geschlossene und eine offene Stellung aufweist, wobei der Deckel (8) in der geschlossenen Stellung, in der der Grasfangkorb (2) vom Gehäuse (1) durch Abheben vom Gehäuse abnehmbar ist, auf dem Grasfangkorb (2) liegt,
**dadurch gekennzeichnet, dass** die Handlung des Abhebens des Grasfangkorbs (2) von dem Gehäuse (1) eine Bewegung des Deckels (8) von der geschlossenen Stellung in die offene Stellung bewirkt.

2. Rasenmäher nach Anspruch 1, wobei die Handlung des Wiedereinsetzens des Grasfangkorbs (2) am Gehäuse (1) eine Bewegung des Deckels (8) von der offenen Stellung in die geschlossene Stellung bewirkt.

3. Rasenmäher nach Anspruch 1 oder Anspruch 2, wobei der Deckel (8) in der offenen Stellung verbleibt, bis der Grasfangkorb (2) wiedereingesetzt ist.

4. Rasenmäher nach einem der vorhergehenden Ansprüche, wobei der Deckel (8) in der offenen Stellung und in der geschlossenen Stellung stabil ist, aber bei der Bewegung zwischen der offenen Stellung und der geschlossenen Stellung instabil ist.

5. Rasenmäher nach Anspruch 4, wobei der Deckel (8) während der Bewegung zwischen der offenen Stellung und der geschlossenen Stellung dazu neigt, sich in die offene oder die geschlossene Stellung zu bewegen, und wobei der Deckel (8) einen Gleichgewichtspunkt zwischen der offenen und der geschlossenen Stellung aufweist, an dem der Deckel (8) seine Bewegungsneigung in die offene Stellung zu einer Bewegungsneigung in die geschlossene Stellung ändert.

6. Rasenmäher nach Anspruch 5, wobei die Handlung des Abhebens des Grasfangkorbs (2) vom Gehäuse (1) den Deckel (8) am Gleichgewichtspunkt vorbei bewegt.

7. Rasenmäher nach Anspruch 5 oder Anspruch 6, wobei die Handlung des Wiedereinsetzens des Grasfangkorbs (2) den Deckel (8) am Gleichgewichtspunkt vorbei bewegt.

8. Rasenmäher nach einem der vorhergehenden Ansprüche, wobei die Bewegung des Deckels (8) dadurch bewirkt wird, dass ein Teil des Grasfangkorbs (2) in einen Teil des Deckels (8) greift.

9. Rasenmäher nach Anspruch 8, wobei der Deckel (8) mit einem Finger (11) versehen ist, der sich vom Rest des Deckels (8) erstreckt.

10. Rasenmäher nach einem der vorhergehenden Ansprüche, der mit mindestens einer Arretiervorrichtung versehen ist, die ein Halten des Deckels (8) in der offenen oder geschlossenen Stellung bewirkt, bis der Grasfangkorb (2) auf das Gehäuse (1) wiederaufgesetzt bzw. vom Gehäuse abgehoben ist.

11. Rasenmäher nach einem der vorhergehenden Ansprüche, der mit einem flexiblen Element versehen ist, das sich zwischen dem Deckel (8) und dem Gehäuse (1) erstreckt.

12. Rasenmäher nach einem der vorhergehenden Ansprüche, wobei der Deckel (8) drehgelenkig auf dem Gehäuse (1) montiert ist.

13. Rasenmäher nach einem der vorhergehenden Ansprüche, wobei der Grasfangkorb (2) einen Griff (6) umfasst, der sich oberhalb des Schwerpunkts des Grasfangkorbs (2) befindet, wenn der Grasfangkorb (2) von dem Gehäuse (1) getragen wird.

14. Rasenmäher nach einem der vorhergehenden Ansprüche, wobei der Grasfangkorb (2) mit einer Öffnung zum Entleeren von Gras im Grasfangkorb (2) versehen ist, und wobei der Deckel (8) in seiner geschlossenen Position über der Öffnung liegt, wenn der Grasfangkorb (2) vom Gehäuse (1) getragen wird.

15. Rasenmäher nach einem der vorhergehenden Ansprüche, wobei der Grasfangkorb (2) mit einem durchsichtigen oder durchscheinenden Fenster zum Erkennen des Grasfüllstands im Grasfangkorb (2) versehen ist.

16. Rasenmäher nach einem der Ansprüche 1 bis 14, wobei der Grasfangkorb (2) durchsichtig oder durchscheinend ist, sodass der Grasfüllstand beim Blick durch den Grasfangkorb (2) bestimmbar ist.

## Revendications

1. Tondeuse à gazon comprenant un carter (1) et un bac de ramassage d'herbes (2), le carter (1) soutenant le bac de ramassage d'herbes (2), la tondeuse à gazon comprenant en outre un couvercle (8) monté sur le carter (1) et ayant une position fermée et une position ouverte , le couvercle (8) reposant sur le bac de ramassage d'herbes (2) en position fermée, dans laquelle le bac de ramassage d'herbes (2) peut être enlevé du carter (1) en le soulevant du,
**caractérisée en ce que** l'action de soulever le bac de ramassage d'herbes (2) du carter (1) provoque le changement de la position fermée à la position ouverte du couvercle (8).

2. Tondeuse à gazon selon la revendication 1, dans laquelle l'action de replacer le bac de ramassage d'herbes (2) sur le carter (1) provoque le changement de la position ouverte à la position fermée du couvercle (8).

3. Tondeuse à gazon selon la revendication 1 ou la revendication 2, dans laquelle le couvercle (8) reste en position ouverte jusqu'à ce que le bac de ramassage d'herbes (2) soit replacé.

4. Tondeuse à gazon selon l'une quelconque des revendications précédentes, dans laquelle le couvercle (8) reste fixe en position ouverte et en position fermée mais est mobile entre la position ouverte et la position fermée.

5. Tondeuse à gazon selon la revendication 4, dans laquelle, lorsque le couvercle (8) change de position ouverte ou fermée, il tend à se déplacer vers la position ouverte ou fermée, et dans laquelle le couvercle (8) a un point d'équilibre entre les positions ouverte et fermée, auquel le couvercle (8) passe d'une tendance à aller vers la position ouverte à une tendance à aller vers la position fermée.

6. Tondeuse à gazon selon la revendication 5, dans laquelle l'action de soulever le bac de ramassage d'herbes (2) du carter (1) fait passer le couvercle (8) sur le point d'équilibre.

7. Tondeuse à gazon selon la revendication 5 ou la revendication 6, dans laquelle l'action de replacer le bac de ramassage d'herbes (2) fait passer le couvercle (8) sur le point d'équilibre.

8. Tondeuse à gazon selon l'une quelconque des revendications précédentes, dans laquelle le mouvement du couvercle (8) est provoqué par une partie du bac de ramassage d'herbes (2) qui met en prise une partie du couvercle (8).

9. Tondeuse à gazon selon la revendication 8, dans laquelle le couvercle (8) est équipé d'un doigt (11) qui s'étend à partir du reste du couvercle (8).

10. Tondeuse à gazon selon l'une quelconque des revendications précédentes, équipée d'au moins un loquet qui sert à maintenir le couvercle (8) en position ouverte ou fermée jusqu'à ce que le bac de ramassage d'herbes (2) soit replacé ou soulevé du carter (1) , respectivement.

11. Tondeuse à gazon selon l'une quelconque des revendications précédentes, équipée d'un élément flexible s'étendant entre le couvercle (8) et le carter (1).

12. Tondeuse à gazon selon l'une quelconque des revendications précédentes, dans laquelle le couvercle (8) monté de façon pivotante sur le carter (1).

13. Tondeuse à gazon selon l'une quelconque des revendications précédentes, dans laquelle le bac de ramassage d'herbes (2) comprend une poignée (6) positionnée, lorsque le bac de ramassage d'herbes (2) est soutenu par le carter (1), au-dessus du centre de gravité du bac de ramassage d'herbes (2).

14. Tondeuse à gazon selon l'une quelconque des revendications précédentes, dans laquelle le bac de ramassage d'herbes (2) est pourvu d'un orifice servant à vider l'herbe contenue dans le bac de ramassage d'herbes (2), et dans laquelle, lorsque le bac de ramassage d'herbes (2) est soutenu par le carter (1), le couvercle (8) en position fermée recouvre l'orifice.

15. Tondeuse à gazon selon l'une quelconque des revendications précédentes, dans laquelle le bac de ramassage d'herbes (2) est pourvu d'une fenêtre transparente ou translucide permettant de voir le niveau d'herbes contenues dans le bac de ramassage d'herbes (2).

16. Tondeuse à gazon selon l'une quelconque des revendications de 1 à 14, dans laquelle le bac de ramassage d'herbes (2) est transparent ou translucide de sorte qu'il est possible de déterminer le niveau d'herbes coupées en regardant à travers le bac de ramassage d'herbes (2).
